# EUROPEAN PATENT APPLICATION

(11) **EP 2 602 843 A2**
(43) Date of publication of application: **12.06.2013**
(21) Application number: 12802258.9
(22) Date of filing: 22.06.2012
(51) Int. Cl.: H01M 2/04

(54) **POUCH AND POUCH TYPE SECONDARY BATTERY**

(30) Priority: 22.06.2011 KR 20110060545
(71) Applicant: LG Chem, Ltd., Seoul 150-721 (KR)
(72) Inventor: KIM, Bo Hyun, Daejeon 305-340 (KR); CHAE, Jong Hyun, Daejeon 305-509 (KR); PARK, Min Soo, Daejeon 302-773 (KR); LEE, Han Ho, Seoul 156-773 (KR)
(74) Representative: Cabinet Plasseraud
(86) International application number: PCT/KR2012/004959
(87) International publication number: WO 2012/177083

(57) **Abstract**

The present invention relates to a pouch in which a receiving portion having an internal space, and a cover portion for closing the open part of the receiving portion are integrally formed, and a pouch type secondary battery, wherein a bent extension portion is formed around the boundary of the receiving portion and the cover portion. According to the present invention, after the cover portion is bent, the contact surface thereof with the receiving portion is sealed so as to make the inside airtight when assembling the pouch, in which the receiving portion and the cover portion are integrally formed, wherein the bent extension portion is further provided around the boundary of the receiving portion and the cover portion and is sealed, thereby minimizing the penetration of external moisture through the boundary after the pouch is sealed.

## Description

### Technical Field

This application claims priority from Korean Patent Application No. 10-2011-0060545 filed in Republic of Korea on June 22, 2011, the entire contents of which are incorporated herein by reference.

The present invention disclosed herein relates to a pouch and a pouch type secondary battery including the pouch, which prevents moisture from being introduced into the pouch type secondary battery, thereby ensuring performance thereof.

### Background Art

In general, a battery includes a positive electrode, a negative electrode, and electrolyte, to supply electrical energy. The positive electrode and the negative electrode are separated from each other by a separator. The electrolyte is used to transport ions between the positive electrode and the negative electrode.

Such batteries are classified into primary batteries (general batteries) that are not recharged and secondary batteries that are rechargeable.

As portable electronic devices such as cellular phones, notebook computers, PDAs are used, a demand for rechargeable, miniaturized, and high capacity secondary batteries is increased. Accordingly, secondary batteries having improved performances are being produced.

Examples of a secondary battery may include nickel-cadmium batteries, nickel-metal hydride batteries, nickel-hydrogen batteries, and lithium batteries. Of these, lithium secondary batteries having an operating voltage of 3.6V or higher are used as power sources of portable electronic devices, or used in high power hybrid vehicles by connecting several lithium secondary batteries in series. Since the operating voltage of lithium secondary batteries is three times greater than that of nickel-cadmium batteries or nickel-metal hydride batteries, and the energy density per unit weight thereof is excellent, the use of lithium secondary batteries is quickly increased.

According to the types of electrolytes, lithium secondary batteries may be classified into lithium ion batteries using liquid electrolyte, and lithium ion polymer batteries using polyelectrolyte. According to the types of polyelectrolyte, lithium ion polymer batteries may be classified into fully solid type lithium ion polymer batteries having no electrolyte solution, and lithium ion polymer batteries using gel-type polyelectrolyte containing an electrolyte solution.

Lithium ion batteries using an electrolyte solution may be formed by sealing a cylindrical or prismatic metal can, as a container, through welding. Such can-type secondary batteries including a metal can as a container have a fixed shape. Thus, electric products using a can-type secondary battery as a power source are limited in design and volume. To address these limitations, pouch type secondary batteries are developed and used, which are formed by putting electrodes, a separator, and electrolyte into a pouch formed from a film, and sealing the pouch.

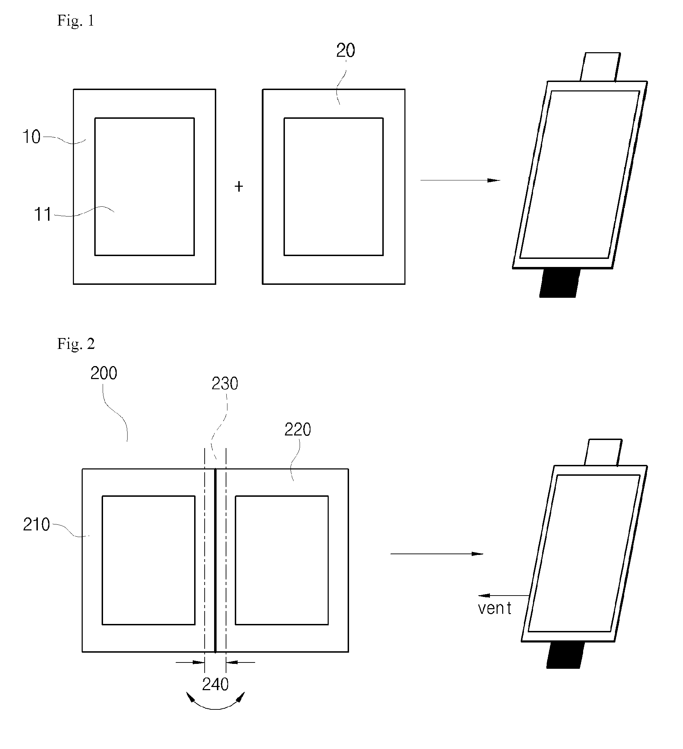

Referring to FIG. 1, a typical pouch for a lithium ion polymer battery has a multi-layered structure formed by sequentially stacking a polyolefin layer, an aluminum layer, and an outer layer. The polyolefin layer, as an inner layer, has heat adhesion property to function as a sealing member. The aluminum layer, as a metal layer, provides mechanical strength, and functions as a barrier layer against moisture and oxygen. The outer layer (typically, a nylon layer) functions as a base material and a protective layer. The polyolefin layer may be formed of casted polypropylene (CPP).

The pouch includes a lower case 10 having an accommodating part 11, and an upper case 20 covering the lower case 10. An electrode assembly accommodated in the accommodating part is formed by stacking and winding a positive electrode, a negative electrode, and a separator. A terminal leads out from each of the positive and negative electrodes. Tapes are attached to a portion of the terminals overlapping a sealing part.

The shape of such pouch type secondary batteries is variable, and the volume and weight thereof are smaller than those of the other secondary batteries having the same capacity as that of the pouch type secondary batteries. However, since a soft pouch is used as a container in pouch type secondary batteries unlike in can type secondary batteries, the mechanical strength and sealing reliability of pouch type secondary batteries may be low. Thus, pouch type secondary batteries are widely used as gel type or fully solid type lithium ion polymer batteries rather than as lithium ion secondary batteries that use an electrolyte solution and that is susceptible to leakage.

Pouch type secondary batteries are also required to have electrodes and electrolyte in a small-sized pouch to increase the capacity thereof. Furthermore, the pouch is required to have a small periphery sealing part that is not directly related to battery capacity or accommodating function.

When the width of the periphery sealing part is decreased, the pouch can accommodate an electrode assembly of higher capacity, and the periphery sealing part that is not directly related to the capacity can be miniaturized. Thus, the capacity of a secondary battery can be increased without changing the overall size of a pouch. However, as the width of the periphery sealing part is decreased, an absolute sealing area is also decreased, which jeopardizes the sealing reliability of the pouch.

Although sealing of an exterior material of pouch type lithium secondary batteries is important, a sealing part formed of a polymer is susceptible to water introduction. Such water or foreign substance introduction accelerates the corrosion of an electrode assembly, terminals, and an exterior material, or damages an electrode active material, thereby degrading the performance of the secondary battery.

In addition, as the service life of batteries is increased, the water introduction degrades the performance of batteries in long term. Thus, it is needed to prevent a foreign substance from being introduced into a battery.

### Disclosure

### Technical Problem

According to an embodiment of the present invention, a cover part integrally formed with an accommodating part is bent, and an electrode assembly accommodated in the accommodating part is sealed, thereby preventing external moisture from being introduced through a bent portion of a pouch.

According to another embodiment of the present invention, when a battery is abnormally operated, a discharging direction of toxic materials from a pouch can be controlled.

### Technical Solution

Embodiments of the present invention provide pouches including: an accommodating part having an inner space; and a cover part integrally formed with the accommodating part, and covering an opening of the accommodating part, wherein a bending extension is disposed around an interface between the accommodating part and the cover part.

In some embodiments, the accommodating part may include a bottom and a plurality of upward bent parts bent upward, respectively, from four sides of the bottom.

In other embodiments, the bending extension may have a length that is 10 or more % of a distance from a bending line disposed between the accommodating part and the cover part to the opening of the accommodating part.

In still other embodiments, a sealing treatment process may be performed on the bending extension when the accommodating part is coupled to the cover part.

In even other embodiments, the sealing treatment process may be performed on 50 or more % of the area of the bending extension.

In yet other embodiments, the pouch may have a rectangular cross section, and the accommodating part may be connected to the cover part through a long side of the pouch.

In further embodiments, a bending line may be disposed in the interface between the accommodating part and the cover part.

In still further embodiments, the pouch may include concavo-convex parts in both the cover part and the accommodating part to accommodate the electrode assembly.

In other embodiments of the present invention, pouch type secondary batteries including: an electrode assembly including: a positive electrode coated with a positive electrode active material; a negative electrode coated with a negative electrode active material; and a separator disposed between the positive electrode and the negative electrode; and a pouch including: an accommodating part having an inner space to accommodate the electrode assembly; and a cover part integrally formed with the accommodating part, and covering an opening of the accommodating part, wherein a bending extension is disposed around an interface between the accommodating part and the cover part.

### Advantageous Effects

According to embodiments of the present invention, when a pouch into which an accommodating part and a cover part are integrated is assembled, the cover part is bent, and then, a contact surface between the accommodating part and the cover part is sealed, thereby sealing the inside of the pouch. At this point, a bending extension disposed on an interface disposed between the accommodating part and the cover part is also sealed to thereby prevent external moisture from being introduced through the interface after the sealing of the pouch.

### Description of Drawings

FIG. 1 is a schematic view illustrating a pouch type secondary battery in the related art;
FIG. 2 is a schematic view illustrating a state before a pouch is assembled, according to an embodiment of the present invention;
FIG. 3 is a cross-sectional view illustrating a pouch type secondary battery according to another embodiment of the present invention; and
FIG. 4 is a cross-sectional view illustrating a pouch type secondary battery according to another embodiment of the present invention.

### DETAILED DESCRIPTION OF PREFERRED EMBODIMENTS

Hereinafter, a pouch and a pouch type secondary battery according to embodiments of the present invention will be described in detail.

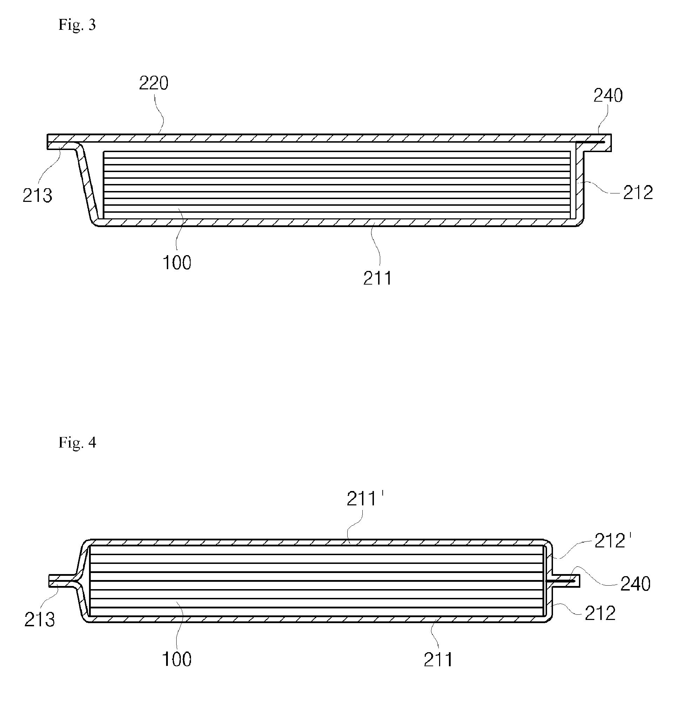

Referring to FIGS. 2 and 3, a pouch according to an embodiment of the present invention includes an accommodating part 210 and a cover part 220 integrally formed with the accommodating part 210. The accommodating part 210 has an inner space corresponding to the thickness and area of an electrode assembly 100. The cover part 220 covers an upper opening of the accommodating part 210.

The accommodating part 210 includes a bottom 211 and a plurality of upward bent parts 212 bent upward, respectively, from four sides of the bottom 211. Each of the bottom 211 and the upward bent parts 212 has a plate shape with a predetermined area and thickness. The accommodating part 210 configured as described above is provided in the form of a container having an approximately 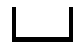 -shaped cross section with an upper opening. The electrode assembly 100 is accommodated in the accommodating part 210.

A flange 213 extends from a region where the accommodating part 210 is covered with the cover part 220, and is fixed using a method such as heat welding so as to seal the inside of the pouch.

The cover part 220 extends from an end of the accommodating part 210, and has a plate shape. A bending extension 240 having a predetermined length is disposed around a bending line 230 between the cover part 220 and the accommodating part 210. When the pouch is assembled, the bending extension 240 protrudes a predetermined length in a direction away from the flange 213, as illustrated in FIG. 3.

Thus, when the cover part 220 is bent to cover the accommodating part 210, the bending extension 240 disposed around the bending line 230 prevents external moisture from being introduced into the bending line 230.

For example, the predetermined length of the bending extension 240 may be 10 or more % of the distance between the bending line 230 and the upper opening of the accommodating part 210, particularly 30 or more % thereof, and more particularly 30 to 70% thereof.

Furthermore, a sealing treating process may be performed on the bending extension 240 to further prevent moisture introduction. Specifically, a sealing treating process may be performed on 50 or more % of the area of the bending extension 240, particularly 75 or more % thereof, and more particularly 100% thereof, so as to prevent moisture introduction more effectively, and to control a discharging direction of toxic materials from the pouch more efficiently. At this point, the sealing treating process may be performed necessarily on at least one of a portion of the bending extension 240 contacting the bending line 230 and a portion of the bending extension 240 contacting the upper opening of the accommodating part 210 in order to prevent moisture introduction and control a discharging direction of toxic materials from the pouch.

Referring to FIG. 4, the pouch may include concavo-convex parts in both the accommodating part 210 and the cover part 220 to accommodate the electrode assembly 100. Also in this case, the bending extension 240 and the flange 213 are provided.

A process of inserting the electrode assembly 100 into the pouch and assembling the pouch will now be described.

The accommodating part 210 is recessed, corresponding to the thickness and area of the electrode assembly 100 to have a space to accommodate the electrode assembly 100. The flange 213 for coupling to the cover part 220 is disposed at edges of the accommodating part 210.

When the electrode assembly 100 is accommodated in the accommodating part 210, the cover part 220, which is integrally formed with the accommodating part 210 and extends from an edge thereof, is bent toward the flange 213 to close the accommodating part 210.

In the related art, a straight bending line is disposed in an interface between an accommodating part and a cover part, that is, in a position corresponding to the right top side of an electrode assembly on the basis of FIG. 3. The straight bending line is pressed under appropriated pressure to form a slot by a press that has a straight line shape (but, is not specifically limited). At this point, a pin hole may be formed in the straight bending line, and external moisture may be introduced through the pin hole.

However, in the current embodiment, the bending extension 240 is disposed on an interface between the accommodating part 210 and the cover part 220, that is, disposed around the bending line 230, and a sealing treatment process is performed on the bending extension 240, thereby significantly suppressing the introduction of external moisture even when a pin hole is formed.

A pouch according to embodiments of the present invention may have a polygonal cross section such as a regular tetragonal cross section or a rectangular cross section. In this case, the pouch may be damaged by inner heating and expansion due to an abnormal operation of a battery, so that toxic materials may be discharged to the outside of the pouch.

At this point, when the pouch has a regular tetragonal cross section, the same expansive force is applied to all sides of the pouch; whereas when the pouch has a rectangular cross section, expansive force applied to the long sides of the pouch is greater than that of the short sides. Thus, when the pouch has a rectangular cross section, the pouch may be split along the long sides, and toxic materials may be discharged also through the long sides.

For example, when the pouch has a rectangular cross section, a connecting portion between an accommodating part and a cover part may be one of the long sides of the pouch. In this case, a toxic material can be discharged through the other of the long sides. As a result, a discharging direction of toxic materials can be controlled.

A pouch type secondary battery will now be described according to an embodiment of the present invention.

Referring to FIGS. 3 and 4, a pouch type secondary battery according to the current embodiment includes: an electrode assembly 100 including a positive electrode, a negative electrode, and a separator; and a pouch 200 accommodating the electrode assembly 100.

The positive electrode is formed by partially applying a positive electrode active material on a positive electrode collector having a thickness ranging from 3 µm to 500 µm. The positive electrode collector may be any collector, provided that the collector does not cause a chemical change in the battery and has high conductivity. For example, the positive electrode collector may be formed of stainless steel, aluminum, nickel, titanium, baking carbon, or aluminum or stainless steel with a surface treated with carbon, nickel, titanium, or silver. The positive electrode collector may have a minutely uneven surface to improve bonding strength with the positive electrode active material, and be provided in one of various forms such as a film, a sheet, a foil, a net, a porous body, a foam body, and a non-woven body.

A positive electrode non-coating portion on which the positive electrode active material is not applied is disposed on an end of the positive electrode collector. A positive terminal is disposed on the positive electrode non-coating portion, and is electrically connected to an external circuit, so that electrons collected on the positive electrode collector can flow to the external circuit. The positive terminal may be connected to the positive electrode non-coating portion through ultrasonic welding, and then, a tape may be attached to the positive terminal to prevent removal thereof.

The negative electrode is formed by applying a negative electrode active material on a negative electrode collector, and drying the negative electrode active material. The negative electrode collector may have a thickness ranging from 3 µm to 500 µm. The negative electrode collector may be any collector, provided that the collector does not cause a chemical change in the battery and has conductivity. For example, the negative electrode collector may include copper, stainless steel, aluminum, nickel, titanium, baking carbon, copper or stainless steel with a surface treated with carbon, nickel, titanium, or silver, or an aluminum-cadmium alloy. The negative electrode collector may have a minutely uneven surface to improve bonding strength with the negative electrode active material.

The pouch includes a laminate sheet having a metal layer and a resin layer to stably accommodate the electrode assembly 100. Since the configuration of the pouch is described above, a description thereof will be omitted.

A positive lead and a negative lead, which are electrically connected to the electrode assembly, protrude a predetermined length out of the pouch.

That is, the positive and negative leads are electrically connected, e. g., through welding, to the positive and negative terminals extending from electrode plates of the electrode assembly, and a portion of the positive and negative leads are exposed to the outside of the pouch.

The positive and negative leads may be opposite to each other with respect to the pouch, or be arrayed in parallel at the same side.

### Symbol of each of the elements in the figures

100: an electrode assembly
200: pouch
210: an accommodating part
211, 211': bottom
212, 212': an upward bent parts
213: a flange
220: a cover part
230: a bending line
240: a bending extension

## Claims

1. A pouch comprising:
an accommodating part having an inner space; and
a cover part integrally formed with the accommodating part, and covering an opening of the accommodating part,
wherein a bending extension is disposed around an interface between the accommodating part and the cover part.

2. The pouch of claim 1, wherein the accommodating part comprises a bottom and a plurality of upward bent parts bent upward, respectively, from four sides of the bottom.

3. The pouch of claim 1, wherein the bending extension has a length that is 10 or more % of a distance from a bending line disposed between the accommodating part and the cover part to the opening of the accommodating part.

4. The pouch of claim 1, wherein a sealing treatment process is performed on the bending extension when the accommodating part is coupled to the cover part.

5. The pouch of claim 4, wherein the sealing treatment process is performed on 50 or more % of the area of the bending extension.

6. The pouch of claim 1, wherein the pouch has a rectangular cross section, and the accommodating part is connected to the cover part through a long side of the pouch.

7. The pouch of claim 1, wherein a bending line is disposed in the interface between the accommodating part and the cover part.

8. A pouch type secondary battery comprising:
an electrode assembly comprising: a positive electrode coated with a positive electrode active material; a negative electrode coated with a negative electrode active material; and a separator disposed between the positive electrode and the negative electrode; and
a pouch comprising: an accommodating part having an inner space to accommodate the electrode assembly; and a cover part integrally formed with the accommodating part, and covering an opening of the accommodating part,
wherein a bending extension is disposed around an interface between the accommodating part and the cover part.

9. The pouch type secondary battery of claim 8, wherein the accommodating part comprises a bottom and a plurality of upward bent parts bent upward, respectively, from four sides of the bottom.

10. The pouch type secondary battery of claim 8, wherein a sealing treatment process is performed on the bending extension when the accommodating part is coupled to the cover part.

11. The pouch type secondary battery of claim 8, wherein the pouch has a rectangular cross section, and the accommodating part is connected to the cover part through a long side of the pouch.

12. The pouch type secondary battery of claim 8, wherein a bending line is disposed in the interface between the accommodating part and the cover part.
